Europäisches Patentamt

European Patent Office

Office européen des brevets

(11) Veröffentlichungsnummer: **0 223 212**
**A2**

## (12) EUROPÄISCHE PATENTANMELDUNG

(21) Anmeldenummer: 86115840.0

(22) Anmeldetag: 14.11.86

(51) Int. Cl.⁴: **G07F 7/02**

(30) Priorität: 19.11.85 DE 3541050

(43) Veröffentlichungstag der Anmeldung:
27.05.87 Patentblatt 87/22

(84) Benannte Vertragsstaaten:
AT CH DE LI

(71) Anmelder: **Siemens Aktiengesellschaft Berlin und München**
**Wittelsbacherplatz 2**
**D-8000 München 2(DE)**

(72) Erfinder: **Heberle, Wolfgang, Dipl.-Phys.**
**Aussere Münchener Strasse 9**
**D-8190 Wolfratshausen(DE)**
Erfinder: **Ludwig, Max, Dipl.-Ing.**
**Am Kornacker 18b**
**D-8000 München 70(DE)**

(54) **Verfahren zur weiteren Verwendung einer zeit- und/oder wertmässig abgeleufenen Kreditkarte.**

(57) Verfahren zur weiteren Verwendung einer zeit- und/oder wertmäßig abgelaufenen Kreditkarte für Selbstverkäufer, der mit einer zentralen Auswertestelle in Verbindung steht. Aufgabe der vorliegenden Erfindung ist es, ein Verfahren aufzuzeigen, durch das z. B. eine Weiterführung von Gesprächen auch bei abgelaufener Kreditkarte möglich ist.

Dies geschieht dadurch, daß in einer zeitlich begrenzten Übergangszeit nach jeder Dienstleistung eine Abbuchung der verbrauchten Gebühreneinheiten in der zentralen Auswertestelle vom Konto des Karteninhabers vorgenommen wird.

EP 0 223 212 A2

## Verfahren zur weiteren Verwendung einer zeit-und/oder wertmäßig abgelaufenen Kreditkarte

Die Erfindung beinhaltet ein Verfahren zur weiteren Verwendung einer zeit-und/oder wertmäßig abgelaufenen Kreditkarte für Selbstverkäufer, der mit einer zentralen Auswertestelle in Verbindung steht, insbesondere für mit Kreditkarten bedienbare mit einem Vermittlungsamt verbundene fernmeldetechnische Geräte.

Bei Verwendung von Kreditkarten zum Zweck des bargeldlosen Telefonierens tritt der Fall ein, daß die auf der Kreditkarte gespeicherten Einheiten zeit-oder wertmäßig verbraucht sind. Das hat z. B. zur Folge, daß Telefongespräche in unerwünschter Weise plötzlich unterbrochen werden. Der Telefonbenutzer kann zur Aufrechterhaltung des Gespräches nur eine neue Kreditkarte verwenden, die jedoch nicht immer zur Verfügung steht.

Aufgabe der vorliegenden Erfindung ist es, ein Verfahren aufzuzeigen, durch das eine Weiterführung von Gesprächen auch bei abgelaufener Kreditkarte möglich ist.

Diese Aufgabe wird dadurch gelöst, daß in einer zeitlich begrenzten Übergangszeit nach jeder Dienstleistung eine Abbuchung der verbrauchten Gebühreneinheiten in der zentralen Auswertestelle vom Konto des Karteninhabers vorgenommen wird.

Damit ist im zeitlich begrenzten Rahmen ein Weitertelefonieren möglich. Da die Abbuchung jedoch nach jeder Dienstleistung erfolgt, entstehen für den Benutzer erhöh te Abbuchungskosten. Diese erhöhten Abbuchungskosten stellen für den Benutzer jedoch einen gewissen Anreiz dar, sich umgehend eine neue Kreditkarte zu beschaffen.

## Ansprüche

Verfahren zur weiteren Verwendung einer zeit-und/oder wertmäßig abgelaufenen Kreditkarte für Selbstverkäufer, der mit einer zentralen Auswertestelle in Verbindung steht, insbesondere für mit Kreditkarten bedienbare, mit einem Vermittlungsamt verbundene fernmeldetechnische Geräte, **dadurch gekennzeichnet,** daß in einer zeitlich begrenzten Übergangszeit nach jeder Dienstleistung eine Abbuchung der verbrauchten Gebühreneinheiten in der zentralen Auswertestelle vom Konto des Karteninhabers vorgenommen wird.